# EUROPÄISCHE PATENTSCHRIFT

(11) **EP 0 835 081 B1**
(45) Veröffentlichungstag und Bekanntmachung des Hinweises auf die Patenterteilung: **10.11.1999**
(21) Anmeldenummer: 96922800.6
(22) Anmeldetag: 12.06.1996
(51) Int. Cl.: A61C 17/26, A46B 9/04

(54) **BÜRSTENTEIL FÜR EINE ELEKTRISCHE ZAHNBÜRSTE**
BRUSH FOR AN ELECTRIC TOOTHBRUSH
BROSSETTE POUR BROSSE A DENTS ELECTRIQUE

(30) Priorität: 24.06.1995 DE 19523016
(43) Veröffentlichungstag der Anmeldung: 15.04.1998
(73) Patentinhaber: Braun Aktiengesellschaft, Frankfurt am Main (DE)
(72) Erfinder: KRESSNER, Gerhard, D-63674 Altenstadt (DE); DRIESEN, Georges, D-61276 Weilrod (DE)
(74) Vertreter: Vorbeck, Wolfgang, Dr.
(86) Internationale Anmeldenummer: EP9602549
(87) Internationale Veröffentlichungsnummer: WO9701307

(56) Entgegenhaltungen:
- WO-A-91/07116
- WO-A-94/21192
- FR-A- 2 587 183

## Beschreibung

Die Erfindung betrifft ein Bürstenteil für eine elektrische Zahnbürste gemäß dem Oberbegriff von Anspruch 1.

Ein derartiges Bürstenteil für eine elektrische Zahnbürste ist aus der internationalen Patentanmeldung WO 94/21192 bekannt.

Bei diesem Bürstenteil für eine elektrische Zahnbürste ist die Borstenlänge der auf dem Außenring des Borstenträgers angeordneten Borstenbüschel unterschiedlich. Insbesondere ist vorgeschlagen, Borstenbüschel mit längeren Borsten auf einem Durchmesser innerhalb eines Außenrings anzuordnen. Damit ist es für den Benutzer möglich, mit Hilfe der längeren Borstenbüschel insbesondere die Zahnzwischenräume besser zu reinigen.

Davon ausgehend ist es die Aufgabe der Erfindung, ein Bürstenteil für eine elektrische Zahnbürste zu schaffen, die eine Weiter verbesserte Reinigung der Zähne, insbesondere der Zahnzwischenräume ermöglicht.

Diese Aufgabe wird bei einem Bürstenteil gemäß Anspruch 1 gelöst.

Mit der Anordnung von zwei diametral angeordneten Gruppen längeren Borstenbüschel im Außenring des Borstenträgers wird eine besonders gute Reinigung von Zahnzwischenräumen erreicht. Dies beruht vermutlich darauf, daß sich bei der Zahnreinigung die kürzeren Borstenbüschel des Außenrings des Borstenträgers auf der Zahnfläche abstützen und damit die längeren Borstenbüschel des Außenrings vollständig in die Zahnzwischenräume eindringen können. Auf diese Weise werden einerseits durch die Gruppen von längeren Borstenbüscheln des Außenrings die Zahnzwischenräume gründlich geputzt und andererseits durch die kürzeren Borstenbüschel des Außenrings auch die Zahnflächen gleichmäßig gereinigt.

Bei einer vorteilhaften Weiterbildung der Erfindung sind auf dem Außenring vierzehn Borstenbüschel angeordnet, mit einer Gruppe von vier benachbarten kurzen Borstenbüscheln, einer Gruppe von drei benachbarten langen Borstenbüscheln, einer Gruppe von vier benachbarten kurzen Borstenbüscheln und einer Gruppe von drei benachbarten langen Borstenbüscheln. Jede der Gruppen von Borstenbüscheln füllt damit einen Kreissektor des Außenrings aus. Auf diese Weise sind in einander diametral gegenüberliegenden Kreissektoren jeweils lange oder kurze Borstenbüschel angeordnet. Die langen und kurzen Borstenbüschel sind dadurch symmetrisch auf dem Außenring des Borstenträgers angeordnet. Dies hat sich für die Reinigung der Zahnzwischenräume als besonders vorteilhaft herausgestellt.

Der Grund hierfür liegt vermutlich darin, daß die in den beiden Kreissektoren vorhandenen langen Borstenbüschel bei der Zahnreinigung auf beiden Seiten eines Zahnhalses in die dortigen Zahnzwischenräume eintauchen und diese reinigen können, während die kürzeren Borstenbüschel zur Abstützung des Borstenträgers auf der Zahnfläche und damit zu dessen Reinigung beitragen.

Bei der Erfindung sind in der Mittelposition des Borstenträgers die Kreissektoren mit den Gruppen von langen Borstenbüscheln längs der Mittellängsachse und die Kreissektoren mit den kurzen Borstenbüscheln quer zur Mittellängsachse angeordnet. Dies dient zür lösung der gestellten Aufgabe. Hält ein Benutzer die elektrische Zahnbürste bei der Zahnreinigung etwa parallel zum Oberkiefer bzw. Unterkiefer, so können die langen Borstenbüschel in die Zahnzwischenräume eintauchen und diese reinigen.

Bei einer vorteilhaften Weiterbildung der Erfindung weisen die Borstenbüschel bzw. die Gruppen von Borstenbüscheln mit jeweils unterschiedlicher Länge unterschiedliche Farben auf. Besonders zweckmäßig ist es aufgrund der stärkeren Beanspruchung, wenn die langen Borstenbüschel aus Farb-indikator-Borsten, insbesondere aus grünen oder blauen Borsten bestehen. Dadurch kann der Benutzer auch optisch ohne weiteres die langen und die kurzen Borstenbüschel voneinander unterscheiden. Dies hat den Vorteil, daß allein schon durch diesen optischen Eindruck der Benutzer die elektrische Zahnbürste richtig ausrichtet und damit die beschriebene verbesserte Reinigungswirkung durch die längeren Borstenbüschel ohne weiteres Zutun erreicht werden kann.

Bei einer vorteilhaften Weiterbildung der Erfindung weisen die Borstenbüschel des Mittelrings eine im wesentlichen einheitliche Borstenlänge auf, die etwa der Borstenlänge der kurzen Borstenbüschel des Außenrings entspricht. Dies hat den Vorteil, daß nicht nur, wie erläutert, die kurzen Borstenbüschel des Außenrings zum Abstützen auf der Zahnfläche herangezogen werden, sondern zusätzlich auch die ebenfalls kurzen Borstenbüschel des Mittelrings. Besonders zweckmäßig ist es dabei, wenn die in Bezug auf die langen Borstenbüschel des Außenrings radial innen liegenden, benachbarten Borstenbüschel des Mittelrings aus Farb-indikator-Borsten, insbesondere aus grünen oder blauen Borsten bestehen.

Die farbigen Borstenbüschel des Mittelrings und des Außenrings bilden dadurch zwei sich gegenüberstehende Keile. Damit wird der beschriebene optische Effekt einer automatisch richtigen Ausrichtung der elektrischen Zahnbürste durch den Benutzer noch verstärkt.

Bei einer vorteilhaften Weiterbildung der Erfindung sind auf einem Innenfeld des Borstenträgers wenigstens zwei, bevorzugt etwa quer zur Mittelposition des Borstenträgers angeordnete kurze Borstenbüschel vorgesehen. Diese dienen, wie die kurzen Borstenbüschel des Außenrings und des Mittelrings, der weiteren Abstützung des Borstenträgers auf der Zahnfläche.

Weitere Merkmale, Vorteile und Anwendungsmöglichkeiten der Erfindung ergeben sich aus der nachfolgenden Beschreibung von Ausführungsbeispielen, die in der Zeichnung näher dargestellt sind. .

Es zeigen:
Fig. 1 eine schematische Darstellung einer elektrischen Zahnbürste in einer Seitenansicht,
Fig. 2 eine schematische Darstellung einer ersten Ausführungsform eines Borstenträgers für die elektrische Zahnbürste der Fig. 1 in einer Draufsicht auf die Borsten,
Fig. 3 eine schematische Darstellung einer zweiten Ausführungsform eines Borstenträgers für die elektrische Zahnbürste der Fig. 1 in einer Draufsicht auf die Borsten,
Fig. 4 eine schematische Darstellung einer dritten Ausführungsform eines Borstenträgers für die elektrische Zahnbürste der Fig. 1 in einer Draufsicht auf die Borsten, und

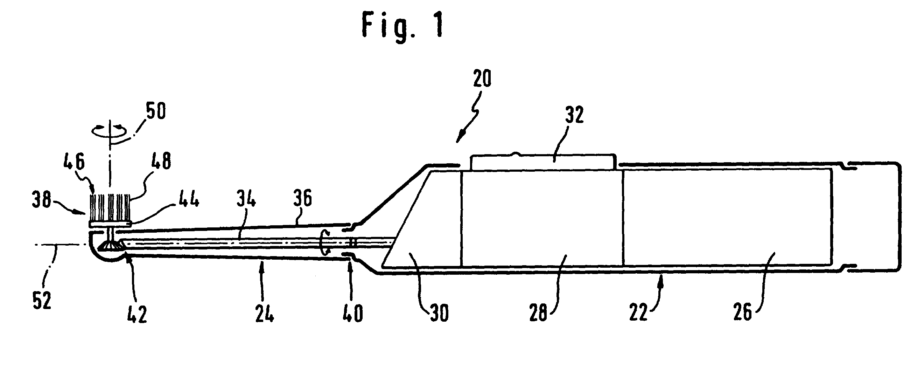

In Figur 1 ist mit der Bezugsziffer 20 eine elektrische Zahnbürste bezeichnet. Die Zahnbürste 20 besteht aus einem Griffteil 22 und einem daran ankuppelbaren Bürstenteil 24. Das Griffteil 22 nimmt einen Akkumulator 26 oder auch eine Batterie, einen Elektromotor 28, sowie eine Umsteuerungseinrichtung 30 auf zur Umsetzung der kontinuierlichen Rotationsbewegung des Elektromotors 28 in eine oszillierende Bewegung. Am Griffteil 22 ist außen ein Schalter 32 zur Aktivierung der Zahnbürste 20 angebracht. Das Bürstenteil 24 weist ein hohles Trägerrohr 36 auf, welches eine Welle 34 aufnimmt. Das Trägerrohr 36 und die Welle 34 sind über eine Kupplung 40 mit dem Griffteil 22 verbindbar. An dem dem Griffteil 22 abgewandten Ende des Bürstenteils 24 ist eine Bürste 38 vorgesehen mit einem Borstenträger 44 zur Aufnahme der Borsten 48 bzw. Borstenbüschel 46. Über eine Kegelradverzahnung 42 am Ende der Welle 34 wird die Bürste 38 in eine oszillierende Bewegung versetzt. Der dabei vom Borstenträger 44 überstrichene Winkelbereich nimmt bevorzugt einen Wert im Bereich von etwa + /- 35 Grad + /- 5 Grad an, wobei jedoch auch Werte im Bereich von + /- 10 Grad bis + /- 100 Grad möglich sind. Die Oszillationsfrequenz kann zwischen etwa 10 Hz und etwa 100 Hz liegen, bevorzugt bei etwa 40 Hz bis 70 Hz. Die Drehachse 50 des Borstenträgers 44 bildet mit der Drehachse 52 der Welle 34 einen Winkel von etwa 90 Grad. Die Zahnbürste der Figur 1 ist im Detail in der internationalen Patentanmeldung WO 91/07116 der Anmelderin beschrieben.

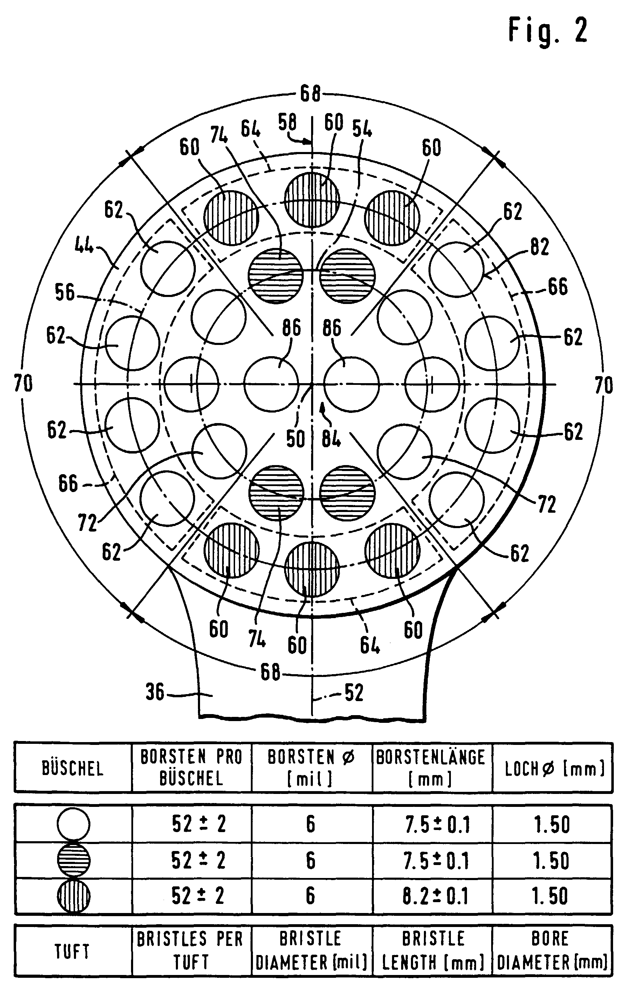

In den Figuren 2 bis 5 sind vier Ausführungsformen von Borstenträgern 44 dargestellt, die sich in der Anordnung, Ausgestaltung und Auswahl der Borstenbüschel 46 bzw. Borsten 48 voneinander unterscheiden. In den Figuren 2 bis 5 ist das Trägerrohr 36 angedeutet sowie die Drehachse 52 der Welle 34, die mit der Mittellängsachse des Trägerrohrs 36 und damit des Bürstenteils 24 etwa zusammenfällt. In der Mitte der Figuren 2 bis 5 ist die Drehachse 50 des Borstenträgers 44 dargestellt. Der Borstenträger 44 ist im wesentlichen als kreisförmige Platte ausgebildet mit einem Durchmesser zwischen etwa 11 mm und etwa 15 mm, vorzugsweise etwa 12 mm. Die Borstenbüschel 46 bzw. Borsten 48 sind auf der Oberseite des Borstenträgers 44 auf einem Mittelring 54, einem Außenring 56 und einem Innenfeld 84 bzw. Innenring 88 angeordnet, die etwa konzentrisch zu der Drehachse 50 des Borstenträgers 44 vorgesehen sind. Die Darstellungen der Figuren 2 bis 5 zeigen die Mittelposition 58 des Borstenträgers 44, also die Position beim Durchlauf durch 0 Grad bei der oszillierenden Drehbewegung von + /- 35 Grad des Borstenträgers 44.

Bei der ersten Ausführungsform des Borstenträgers nach der Figur 2 sind auf dem Außenring 56 insgesamt vierzehn Borstenbüschel 60, 62 angeordnet, auf dem Mittelring 54 sind insgesamt zehn Borstenbüschel 72, 74 angeordnet und im Innenfeld 84 befinden sich zwei Borstenbüschel 86.

Benachbarte Borstenbüschel 60, 62 auf dem Außenring 56 sind in vier Gruppen 64, 66 zusammengefaßt bzw. aufgeteilt. Die Gruppe 64 weist drei Borstenbüschel 60 auf, die symmetrisch zur Mittellängsachse 52 angeordnet sind und sich über einen Kreissektor 68 mit einem Zentriwinkel von etwa 80 Grad erstrecken. Die Gruppe 64 ist zweimal vorhanden, und zwar symmetrisch auf beiden Seiten einer gedachten Querachse, die quer zur Mittellängsachse 52 durch die Drehachse 50 verläuft. Die zu den beiden Gruppen 64 gehörigen Kreissektoren 68 verlaufen somit etwa längs zur Mittellängsachse 52. Die Gruppe 66 weist vier Borstenbüschel 62 auf, die symmetrisch zu der genannten Querachse angeordnet sind und sich über einen Kreissektor 70 mit einem Zentriwinkel von etwa 100 Grad erstrecken. Die Gruppe 66 ist zweimal vorhanden, und zwar symmetrisch auf beiden Seiten der Mittellängsachse 52. Die zu den beiden Gruppen 66 gehörigen Kreissektoren 70 verlaufen somit etwa quer zur Mittellängsachse 52.

Die Borstenbüschel 60 der Gruppen 64 auf dem Außenring 56 sind mit langen Borsten versehen, die eine Länge von etwa 8,2 mm + /- etwa 0,2 mm bis 0,5 mm aufweisen. Die Borstenbüschel 62 der Gruppen 66 auf dem Außenring 56 sind mit kurzen Borsten versehen, die eine Länge von etwa 7,5 mm + /- etwa 0,1 bis 0,5 mm aufweisen. Die langen und die kurzen Borsten der Borstenbüschel 60, 62 von beiden Gruppen 64, 66 besitzen einen Durchmesser von etwa 6 mil. Die Borstenbüschel 60, 62 von beiden Gruppen 64, 66 weisen eine Anzahl von etwa 54 + /- 4 derartige Borsten auf. Der Lochdurchmesser der Aufnahmelöcher 82 für die Borstenbüschel 60, 62 in dem Borstenträger 44 beträgt etwa 1,5 mm.

Die langen Borsten der Borstenbüschel 60 und die kurzen Borsten der Borstenbüschel 62 weisen unterschiedliche Farben auf. Dies kann insbesondere durch Farb-Indikator-Borsten erreicht werden, beispielsweise durch grüne oder blaue derartige Borsten, die als lange Borsten der Borstenbüschel 60 verwendet werden.

Die auf dem Mittelring 54 vorgesehenen zehn Borstenbüschel 72, 74 sind derart angeordnet, daß jeweils zwei Borstenbüschel 74 dem Bereich der beiden Kreissegmente 68 zugeordnet sind und jeweils drei Borstenbüschel 72 dem Bereich der beiden Kreissegmente 70. Die beiden Borstenbüschel 74 des Mittelrings 54 sind dabei in Bezug auf die benachbarten langen Borstenbüschel 60 des Außenrings 56 radial innenliegend angeordnet.

Die Borsten der Borstenbüschel 72, 74 des Mittelrings 54 weisen alle eine einheitliche Länge auf, und zwar etwa die Länge der kurzen Borsten der Borstenbüschel 62 des Außenrings 56, also etwa 7,5 mm +/- etwa 0,1 bis 0,5 mm. Sie haben einen Borstendurchmesser von etwa 6 mil (1 mil = 0,0254 mm). Etwa 54 + /- 4 derartiger Borsten bilden eines der Borstenbüschel 72, 74. Der Lochdurchmesser der Aufnahmelöcher 82 für die Borstenbüschel 72, 74 im Borstenträger 44 beträgt etwa 1,5 mm.

Die beiden Borstenbüschel 74, die jeweils im Bereich der beiden Kreissegmente 68 angeordnet sind, weisen eine zu den anderen Borstenbüscheln 62, 72 unterschiedliche Farbe auf. Dies kann dadurch erreicht werden, daß die Borsten der Borstenbüschel 74 insbesondere als Farb-Indikator-Borsten ausgestaltet sind und beispielsweise eine blaue oder grüne Farbe besitzen.

Von den beiden Borstenbüschel 86 im Innenfeld 84 ist jeweils eines davon im Bereich der beiden Kreissektoren 70 angeordnet. Die beiden Borstenbüschel 86 sind somit etwa quer zur Mittellängsachse 52 und damit etwa quer zur Mittelposition 58 angeordnet. Die Länge der Borsten der Borstenbüschel 86 beträgt etwa 7,5 mm +/-0,1 bis 0,5 mm, der Borstendurchmesser beträgt etwa 6 mil. Jedes der beiden Borstenbüschel 86 wird von einer Anzahl von etwa 54 + /- 4 Borsten gebildet. Der Lochdurchmesser der Aufnahmelöcher 82 für die Borstenbüschel 86 beträgt etwa 1,5 mm. Im Bereich der beiden Kreissektoren 68 sind im Innenfeld 84 keine Borstenbüschel vorgesehen.

Bei der ersten Ausführungsform der Figur 2 weisen somit alle Borstenbüschel 62, 72, 86 im Bereich der beiden Kreissektoren 70 etwa dieselbe Borstenlänge und etwa denselben Borstendurchmesser auf. Im Bereich der beiden Kreissektoren 68 hingegen sind die Borstenbüschel 60 im Außenring 56 länger als die Borstenbüschel 74 im Mittelring 54. Des weiteren besitzen die Borstenbüschel 60, 74 in den beiden Kreissektoren 68 eine andere Farbe als die Borstenbüschel 62, 72, 86 in den beiden Kreissektoren 70.

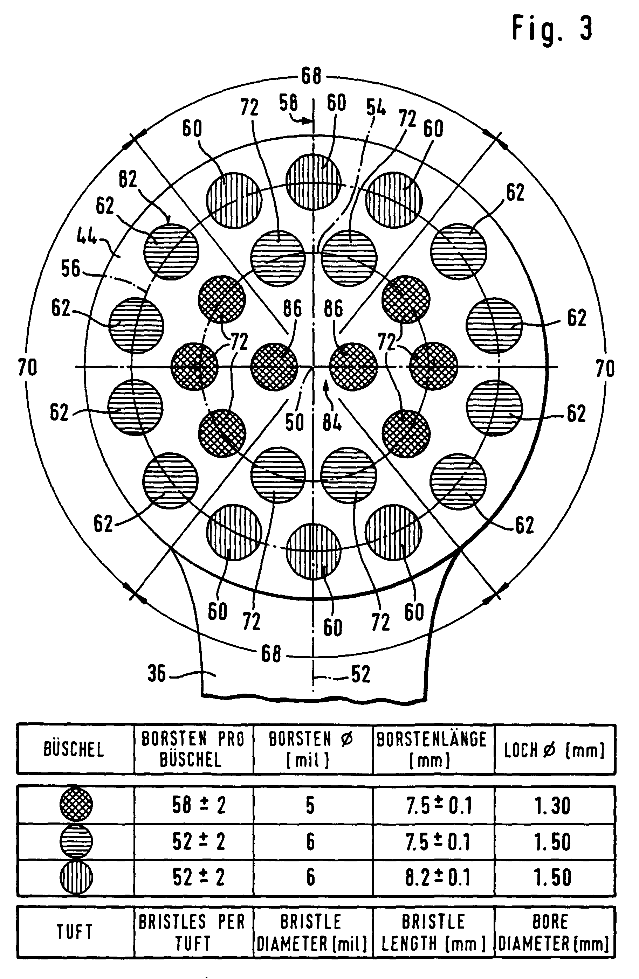

Bei der zweiten Ausführungsform der Figur 3 besteht der einzige Unterschied zu der ersten Ausführungsform der Figur 2 darin, daß im Bereich der beiden Kreissektoren 70 die Borstenbüschel 62 im Außenring 56 einen größeren Borstendurchmesser aufweisen als die Borstenbüschel 72, 86 im Mittelring 54 und im Innenfeld 84. Die Borsten der Borstenbüschel 62 besitzen wie bisher einen Durchmesser von etwa 6 mil, während die Borsten der Borstenbüschel 72, 86 einen Durchmesser von etwa 5 mil besitzen. Der Lochdurchmesser der Aufnahmelöcher 82 für die Borstenbüschel 72, 86 beträgt damit nur etwa 1,3 mm und die Anzahl von Borsten pro Borstenbüschel 72, 86 beträgt nunmehr etwa 60 + /- 4. Die Länge der Borsten der Borstenbüschel 62, 72, 86 ist unverändert etwa 7,5 mm +/-0,1 mm bis 0,5 mm.

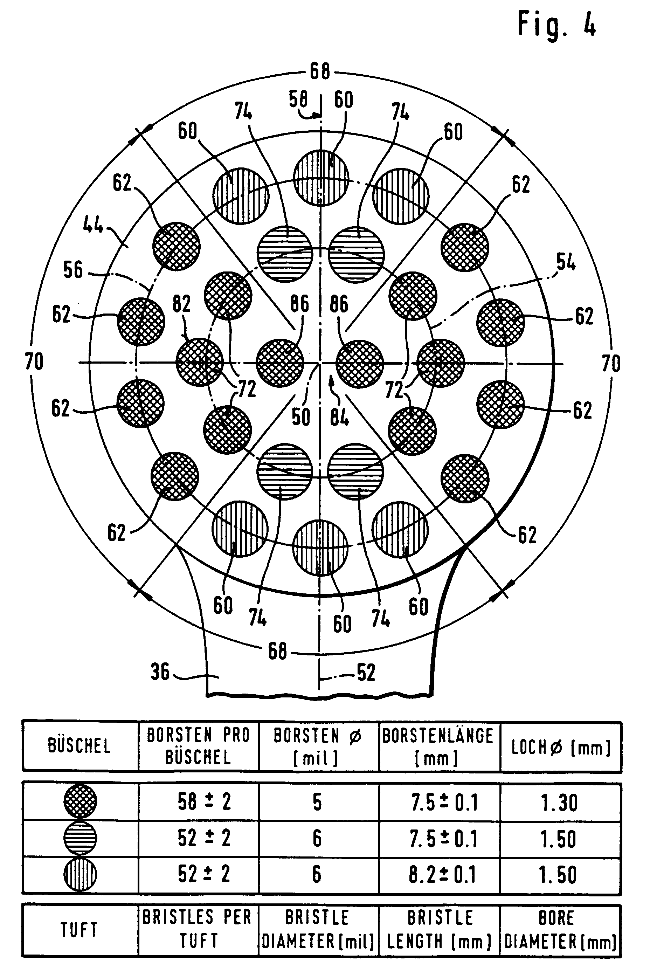

Bei der dritten Ausführungsform der Figur 4 besteht der einzige Unterschied zu der ersten Ausführungsform der Figur 2 darin, daß im Bereich der beiden Kreissektoren 70 alle Borstenbüschel 62, 72, 86 im Außenring 56, im Mittelring 54 und im Innenfeld 84 einen kleineren Borstendurchmesser aufweisen als die der Borstenbüschel 60 der Kreissektoren 68. Die Borsten der Borstenbüschel 62, 72, 86 besitzen einen Durchmesser von etwa 5 mil. Der Lochdurchmesser der Aufnahmelöcher 82 für die Borstenbüschel 62, 72, 86 beträgt etwa 1,3 mm und die Anzahl von Borsten pro Borstenbüschel 62, 72, 86 beträgt etwa 60 + /- 4. Die Länge der Borsten der Borstenbüschel 62, 72, 86 ist unverändert etwa 7,5 mm +/-0,1 mm bis 0,5 mm.

Die beschriebenen Ausführungsformen von Borstenträgern 44 können auf verschiedene Weisen im Zusammenhang mit der ebenfalls beschriebenen elektrischen Zahnbürste 20 betrieben werden. So ist es möglich, daß der Borstenträger 44 mit einer Frequenz von etwa 62 Hz + /- 5 Hz in eine alternierende Oszillation um die Drehachse 50 versetzt wird. Der Oszillationswinkel beträgt dabei etwa + /- 30 Grad + /- 5 Grad bis 10 Grad bezogen auf die Mittelposition 58, die Amplitude der Auslenkung der Borsten beträgt etwa + /- 3 bis 4 mm und die Borstengeschwindigkeit liegt etwa zwischen o,5 m/sec und 2 m/sec, bevorzugt bei etwa 0,9 m/sec bis 1,7 m/sec, insbesondere bei etwa 1,3 m/sec. Diese Möglichkeit kann beispielsweise dadurch verändert werden, daß der Borstenträger 44 mit einer Frequenz von etwa 47 Hz + /- 5 Hz betrieben wird, was bei ansonsten gleichen Werten eine Borstengeschwindigkeit von etwa 0,9 m/sec zur Folge hat. Eine andere Möglichkeit besteht darin, daß der Borstenträger 44 mit einer Frequenz von etwa 115 Hz +/-20 Hz in eine alternierende Oszillation um die Drehachse 50 versetzt wird. Dabei beträgt der Oszillationswinkel etwa + /- 11 Grad + /- 3 Grad bezogen auf die Mittelposition 58, die Amplitude der Auslenkung der Borsten beträgt etwa 0,5 mm bis 2,5 mm, bevorzugt etwa 1 mm bis 1,2 mm, und die Borstengeschwindigkeit liegt etwa zwischen 0,6 m/sec und 1,2 m/sec, bevorzugt bei etwa 0,9 m/sec.

## Patentansprüche

1. Bürstenteil (24) für eine elektrische Zahnbürste (20) mit einem Griffteil (22), das mit dem Bürstenteil (24) verbindbar ist, mit einem an dem dem Griffteil (22) abgewandten Ende des Bürstenteils (24) angeordneten, insbesondere kreisscheibenförmig ausgebildeten Borstenträger (44), der auf der Oberseite wenigstens in einem Mittelring (54) und einem Außenring (56) angeordnete Borstenbüschel (60, 62, 72, 74) aufweist, wobei der Borstenträger (44), insbesondere aus einer Mittelposition (58) alternierend oszillierend, um eine Drehachse (50) drehbar an dem Bürstenteil (24) gelagert sowie die Drehachse (50) winklig, insbesondere rechtwinklig zu einer Mittellängsachse (52) des Bürstenteils (24) ausgerichtet ist und der Außenring (56) Borstenbüschel (60, 62) unterschiedlicher Borstenlänge aufweist, dadurch gekennzeichnet, daß im Außenring (56) zwei diametral angeordnete Gruppen (64) benachbarter längerer Borstenbüschel (60) vorgesehen sind, in einer Mittelposition (58) des Borstenträgers (44) die beiden diametral angeordneten Gruppen (64) im wesentlichen entlang der Mittellängsachse (52) des Bürstenteils (24) positioniert sind und die weiteren Borstenbüschel (62, 72, 74) des Außenringes (56) und Mittelringes (54) eine geringere Lange als die langen Borstenbüschel (60) der Gruppen (64) aufweisen.

2. Bürstenteil nach Anspruch 1, dadurch gekennzeichnet, daß die kurzen Borstenbüschel (62, 72, 74) des Außenringes (56) und Mittelringes (54) im wesentlichen eine gleiche Länge besitzen.

3. Bürstenteil (24) nach Patentanspruch 1 oder 2, dadurch gekennzeichnet, daß Gruppen (64, 66) von Borstenbüscheln (60, 62) mit jeweils unterschiedlicher Borstenlänge in Kreissektoren (68, 70) des Borstenträgers (44) angeordnet sind.

4. Bürstenteil (24) nach Patentanspruch 3, dadurch gekennzeichnet, daß vier Kreissektoren (68, 70) mit Zentriwinkeln im Bereich von etwa 60 Grad bis etwa 120 Grad vorgesehen sind.

5. Bürstenteil (24) nach Patentanspruch 3 oder 4, dadurch gekennzeichnet, daß in einander diametral gegenüberliegenden Kreissektoren (68, 70) jeweils lange oder kurze Borstenbüschel (60, 62) angeordnet sind.

6. Bürstenteil (24) nach einem der vorhergehenden Patentansprüche, dadurch gekennzeichnet, daß die kurzen Borstenbüschel (62) eine Borstenlänge von etwa 7,5 mm +/-0,2 mm bis 0,5 mm und die langen Borstenbüschel (60) eine Borstenlänge von etwa 8,2 mm + /- 0,2 mm bis 0,5 mm aufweisen.

7. Bürstenteil (24) nach einem der vorhergehenden Patentansprüche, dadurch gekennzeichnet, daß die Borsten der Borstenbüschel (60, 62) einen Durchmesser von etwa 5 bis 6 mil bei einer Anzahl von etwa 50 +/-4 bis 60 +/-4 Borsten pro Borstenbüschel (60, 62) aufweisen, wobei die längeren Borstenbüschel (60) bevorzugt aus Borsten mit einer größeren Dicke bestehen als die Borsten der kürzeren Borstenbüschel (62).

8. Bürstenteil (24) nach einem der vorhergehenden Patentansprüche, dadurch gekennzeichnet, daß auf dem Außenring (56) vierzehn Borstenbüschel (60, 62) angeordnet sind mit einer Gruppe (70) von vier benachbarten kurzen Borstenbüscheln (62), einer Gruppe (68) von drei benachbarten langen Borstenbüscheln (60), einer Gruppe (70) von vier benachbarten kurzen Borstenbüscheln (62) und einer Gruppe (68) von drei benachbarten langen Borstenbüscheln (60).

9. Bürstenteil (24) nach einem der vorhergehenden Patentansprüche, dadurch gekennzeichnet, daß die Borstenbüschel bzw. die Gruppen (68, 70) von Borstenbüscheln (60, 62) mit jeweils unterschiedlicher Länge unterschiedliche Farben aufweisen.

10. Bürstenteil (24) nach Patentanspruch 9, dadurch gekennzeichnet, daß die langen Borstenbüschel (60) aus Farb-Indikator-Borsten, insbesondere aus grünen oder blauen Borsten bestehen.

11. Bürstenteil (24) nach Patentanspruch 1, dadurch gekennzeichnet, daß die Borstenbüschel (72, 74, 76) des insbesondere konzentisch zum Außenring (56) angeordneten Mittelrings (54) eine im wesentlichen einheitliche Borstenlänge aufweisen.

12. Bürstenteil (24) nach Patentanspruch 1, dadurch gekennzeichnet, daß die Borstenbüschel (72, 74) des Mittelrings (54) eine Borstenlänge von 7,5 mm + /- 0,2 mm bis 0,5 mm bei einem Borstendurchmesser von etwa 5 bis 6 mil und einer Anzahl von etwa 50 +/-4 bis 64 +/-4 Borsten pro Borstenbüschel (72, 74) aufweisen.

13. Bürstenteil (24) nach einem der Patentansprüche 11 bis 12, dadurch gekennzeichnet, daß die in Bezug auf die langen Borstenbüschel (60) des Außenrings (56) radial innen liegenden, benachbarten Borstenbüschel (74) des Mittelrings (54) aus Farb-Indikator-Borsten, insbesondere aus grünen oder blauen Borsten bestehen.

14. Bürstenteil (24) nach Patentanspruch 1, dadurch gekennzeichnet, daß die Borstenbüschel (76) des Mittelrings (54) in radialer Richtung seitlich versetzt zu den benachbarten langen Borstenbüscheln (60) des Außenrings (56) angeordnet sind.

15. Bürstenteil (24) nach Patentanspruch 14, dadurch gekennzeichnet, daß der Versatz (78, 80) etwa den 0,5- bis 1,5-fachen Durchmesser der Aufnahmelöcher (82) der Borstenbüschel (76) beträgt.

16. Bürstenteil (24) nach einem der Patentansprüche 14 oder 15, dadurch gekennzeichnet, daß die Borstenbüschel (76) des Mittelrings (54) eine Borstenlänge von 8,0 mm +/-0,2 mm bis 0,5 mm bei einem Borstendurchmesser von etwa 6 mil aufweisen.

17. Bürstenteil (24) nach einem der Patentansprüche 14 bis 16, dadurch gekennzeichnet, daß die Borstenbüschel (76) des Mittelrings (54) aus FarbIndikator-Borsten, insbesondere aus grünen oder blauen Borsten bestehen.

18. Bürstenteil (24) nach einem der vorhergehenden Patentansprüche, dadurch gekennzeichnet, daß auf einem Innenfeld (84) des Borstenträgers (44) wenigstens zwei, bevorzugt etwa quer zur Mittelposition (58) des Borstenträgers (44) angeordnete Borstenbüschel (86) vorgesehen sind.

19. Bürstenteil (24) nach Patentanspruch 18, dadurch gekennzeichnet, daß auf dem Innenfeld (84) des Borstenträgers (44) die Borstenbüschel auf einem Innenring (88) angeordnet sind.

20. Bürstenteil (24) nach einem der Patentansprüche 18 oder 19, dadurch gekennzeichnet, daß die Borsten der Borstenbüschel (86) des Innenfeldes (84) eine Länge von etwa 6,5 mm bis 8 mm, jeweils mit einer Variation von + /- 0,2 mm bis 0,5 mm, einen Durchmesser von etwa 5 bis 6 mil und eine Anzahl von etwa 50 + /- 4 bis 64 + /- 4 Borsten pro Borstenbüschel (86) aufweisen.

21. Bürstenteil (24) nach einem der vorhergehenden Patentansprüche, dadurch gekennzeichnet, daß der Borstenträger (44) mit einer Frequenz von etwa 45 bis 70 Hz +/-5 Hz, bevorzugt etwa 45 Hz +/-5 Hz oder 62 Hz +/-5 Hz, in eine alternierende Oszillation um die Drehachse (50) versetzbar ist, wobei der Oszillationswinkel bei etwa + /- 30 Grad + /- 10 Grad, insbesondere + /-5 Grad bezogen auf die Mittelposition (58), die Amplitude der Auslenkung der Borsten bei etwa + /- 3,3 mm und die Borstengeschwindigkeit zwischen 0,9 m/sec und 1,7 m/sec, bevorzugt bei etwa 1,3 m/sec liegt.

22. Bürstenteil (24) nach einem der Patentansprüche 1 - 20, dadurch gekennzeichnet, daß der Borstenträger (44) mit einer Frequenz von etwa 115 Hz + /- 20 Hz in eine alternierende Oszillation um die Drehachse (50) versetzbar ist, wobei der Oszillationswinkel bei etwa + /- 11 Grad + /- 3 Grad bezogen auf die Mittelposition (58), die Amplitude der Auslenkung der Borsten bei etwa 0,5 mm bis 2,5 mm, bevorzugt bei etwa 1,2 mm, und die Borstengeschwindigkeit zwischen 0,6 m/sec und 1,2 m/sec, bevorzugt bei etwa 0,9 m/sec liegt.

23. Bürstenteil (24) nach einem der vorhergehenden Patentansprüche, dadurch gekennzeichnet, daß der Borstenträger (44) einen Durchmesser von etwa 11 bis 15 mm aufweist.

24. Bürstenteil (24) nach einem der vorhergehenden Ansprüche, dadurch gekennzeichnet, daß die Längendifferenz zwischen den Borstenbüscheln (60, 62) unterschiedlicher Länge bei etwa 0,5 mm bis 1 mm, bevorzugt bei etwa 0,7 mm, liegt.

## Claims

1. A brush section (24) for an electric toothbrush (20), with a handle section (22) connectable with the brush section (24), with a bristle carrier (44) of an in particular circular-disk-shaped configuration which is arranged at the end of the brush section (24) remote from the handle section (22) and has on its upper side bristle tufts (60, 62, 72, 74) disposed at least on one central ring (54) and one outer ring (56), said bristle carrier (44) being mounted on the brush section (24) so as to be rotatable about an axis of rotation (50), in particular in an alternating oscillating fashion from a central position (58), and said axis of rotation (50) being aligned angularly, in particular at right angles to a longitudinal center line (52) of the brush section (24), and said outer ring (56) being set with tufts (60, 62) of bristles of different lengths, **characterized in that** provision is made in the outer ring (56) for two diametrically disposed clusters (64) of adjacent long bristle tufts (60), that in a central position (58) of the bristle carrier (44) the two diametrically disposed clusters (64) are positioned essentially along the longitudinal center line (52) of the brush section (24), and that the further bristle tufts (62, 72, 74) of the outer ring (56) and the central ring (54) are of shorter length than the long bristle tufts (60) of the clusters (64).

2. The brush section as claimed in claim 1, **characterized in that** the short bristle tufts (62, 72, 74) on the outer ring (56) and the central ring (54) are of essentially equal length.

3. The brush section (24) as claimed in patent claim 1 or 2, **characterized in that** clusters (64, 66) of tufts (60, 62) of different bristle length each are arranged in sectors (68, 70) of the bristle carrier (44).

4. The brush section (24) as claimed in patent claim 3, **characterized in that** four sectors (68, 70) are provided with central angles in the range from about 60 degrees to about 120 degrees.

5. The brush section (24) as claimed in patent claim 3 or 4, **characterized in that** the long and the short bristle tufts (60, 62) are each disposed in diametrically opposed sectors (68, 70) of a circle.

6. The brush section (24) as claimed in any one of the preceding patent claims, **characterized in that** the short bristle tufts (62) have bristles of a length of about 7.5 mm ± 0.2 mm to 0.5 mm, and the long bristle tufts (60) have bristles of a length of about 8.2 mm ± 0.2 mm to 0.5 mm.

7. The brush section (24) as claimed in any one of the preceding patent claims, **characterized in that** the bristles of the tufts (60, 62) have a diameter of about 5 to 6 mils with about 50 ± 4 to 60 ± 4 bristles per tuft (60, 62), with the long bristle tufts (60) being preferably comprised of bristles of a thickness greater than that of the bristles of the short bristle tufts (62).

8. The brush section (24) as claimed in any one of the preceding patent claims, **characterized in that** fourteen bristle tufts (60, 62) are arranged on the outer ring (56), comprising a cluster (70) of four adjacent short bristle tufts (62), a cluster (68) of three adjacent long bristle tufts (60), a cluster (70) of four adjacent short bristle tufts (62), and a cluster (68) of three adjacent long bristle tufts (60).

9. The brush section (24) as claimed in any one of the preceding patent claims, **characterized in that** the bristle tufts or the clusters (68, 70) of bristle tufts (60, 62) of different length each differ in color.

10. The brush section (24) as claimed in patent claim 9, **characterized in that** the long bristle tufts (60) are comprised of color indicator bristles, in particular of green or blue bristles.

11. The brush section (24) as claimed in patent claim 1, **characterized in that** the bristle tufts (72, 74, 76) on the central ring (54) disposed in particular concentrically with the outer ring (56) include bristles of a substantially uniform length.

12. The brush section (24) as claimed in patent claim 1, **characterized in that** the tufts (72, 74) on the central ring (54) have bristles of a length of 7.5 mm ± 0.2 mm to 0.5 mm with a bristle diameter of 5 to 6 mils, approximately, and bristles ranging in amount from about 50 ± 4 to 64 ± 4 bristles per tuft (72, 74).

13. The brush section (24) as claimed in any one of the patent claims 11 or 12, **characterized in that** the adjacent tufts (74) on the central ring (54) lying radially inwardly relative to the long bristle tufts (60) on the outer ring (56) are comprised of color indicator bristles, in particular of green or blue bristles.

14. The brush section (24) as claimed in patent claim 1, **characterized in that** the tufts (76) on the central ring (54) are laterally offset in a radial direction relative to the adjacent long bristle tufts (60) on the outer ring (56).

15. The brush section (24) as claimed in patent claim 14, **characterized in that** the amount of offset (78, 80) is about 0.5 to 1.5 times the diameter of the mounting bores (82) for the tufts (76).

16. The brush section (24) as claimed in any one of the patent claims 14 or 15, **characterized in that** the tufts (76) on the central ring (54) have bristles of a length of 8.0 mm ± 0.2 mm to 0.5 mm with a bristle diameter of 6 mils, approximately.

17. The brush section (24) as claimed in any one of the patent claims 14 to 16, **characterized in that** the tufts (76) on the central ring (54) are comprised of color indicator bristles, in particular of green or blue bristles.

18. The brush section (24) as claimed in any one of the preceding patent claims, **characterized in that** at least two tufts (86) which are preferably arranged approximately transversely to the central position (58) of the bristle carrier (44) are provided in an inner zone (84) of the bristle carrier (44).

19. The brush section (24) as claimed in patent claim 18, **characterized in that** in the inner zone (84) of the bristle carrier (44) the tufts are arranged on an inner ring (88).

20. The brush section (24) as claimed in any one of the patent claims 18 or 19, **characterized in that** the bristles of the tufts (86) in the inner zone (84) have a length of between 6.5 mm to 8 mm, approximately, each with a variation of ± 0.2 mm to 0.5 mm, a diameter of 5 to 6 mils, approximately, numbering about 50 ± 4 to 64 ± 4 bristles per tuft (86).

21. The brush section (24) as claimed in any one of the preceding patent claims, **characterized in that** the bristle carrier (44) is adapted to be set in an alternating oscillatory motion about the axis of rotation (50) at a frequency of between 45 and 70 Hz ± 5 Hz, approximately, preferably about 45 Hz ± 5 Hz or 62 Hz ± 5 Hz, with the angle of oscillation being at about ± 30 degrees ± 10 degrees, in particular ± 5 degrees, relative to the central position (58), the amplitude of the bristle deflection being at about ± 3.3 mm, and the bristle speed being in the range from 0.9 m/s to 1.7 m/s, preferably at about 1.3 m/s.

22. The brush section (24) as claimed in any one of the patent claims 1 to 20, **characterized in that** the bristle carrier (44) is adapted to be set in an alternating oscillatory motion about the axis of rotation (50) at a frequency of about 115 Hz ± 20 Hz, with the oscillation angle being at about ± 11 degrees ± 3 degrees relative to the central position (58), the amplitude of the bristle deflection being at about 0.5 mm to 2.5 mm, preferably at about 1.2 mm, and the bristle speed being between 0.6 m/s and 1.2 m/s, preferably at about 0.9 m/s.

23. The brush section (24) as claimed in any one of the preceding patent claims, **characterized in that** the bristle carrier (44) has a diameter of between 11 and 15 mm, approximately.

24. The brush section (24) as claimed in any one of the preceding claims, **characterized in that** the difference in length between the tufts (60, 62) of different bristle length is in the range from about 0.5 mm to 1 mm, preferably at about 0.7 mm.

## Revendications

1. Brossette (24) pour une brosse à dents électrique (20), comportant une poignée (22) qui peut se relier à la brossette (24), un porte-poils (44) qui est disposé à l'extrémité de la brossette (24) opposée à la poignée (22), qui a en particulier la forme d'un disque circulaire et qui, sur la face supérieure, présente des touffes de poils (60, 62, 72, 74) disposées au moins en une couronne médiane (54) et une couronne extérieure (56), dans laquelle le porte-poils (44) est porté sur la brossette (24) avec liberté de rotation autour d'un axe de rotation (50) en oscillant alternativement à partir d'une position médiane (58) et dans laquelle l'axe de rotation (50) est orienté angulairement, en particulier perpendiculairement, par rapport à l'axe longitudinal médian (52) de la brossette (24) et la couronne extérieure (56) présente des touffes de poils (60, 62) de différentes longueurs de poils, caractérisée par le fait que dans la couronne extérieure (56) sont prévus deux groupes (64), disposés diamétralement, de touffes de poils plus longs (60), voisines, que dans une position médiane (58) du porte-poils (44) les deux groupes (64) disposés diamétralement sont sensiblement positionnés le long de l'axe longitudinal médian (52) de la brossette (24) et que les autres touffes de poils (62, 72, 74) de la couronne extérieure (56) et de la couronne médiane (56) présentent une longueur moindre que les touffes de longs poils (60) des groupes (34).

2. Brossette selon la revendication 1, caractérisée par le fait que les touffes de poils courts (62, 72, 74), de la couronne extérieure (56) et de la couronne médiane (54) possèdent sensiblement une même longueur.

3. Brossette (24) selon la revendication 1 ou 2, caractérisée par le fait que des groupes (64, 66) de touffes de poils (60, 62) de longueur de poils respectivement différente sont disposées dans les secteurs circulaires (68, 70) du porte-poils (44).

4. Brossette (24) selon la revendication 3, caractérisée par le fait que sont prévus quatre secteurs circulaires (68, 70) d'angle au centre sur la plage allant d'environ 60 degrés à environ 120°.

5. Brossette (24) selon la revendication 3 ou 4, caractérisée par le fait que dans des secteurs circulaires (68, 70) diamétralement opposés l'un à l'autre, sont chaque fois disposées des touffes de poils longs ou courts (60, 62).

6. Brossette (24) selon l'une des revendications précédentes, caractérisée par le fait que les touffes de poils courts (62) présentent une longueur de poils allant d'environ 7,5 mm +/-0,2 mm à 0,5 mm et les touffes de poils longs (60), une longueur de poils allant d'environ 8,2 mm +/-0,2 mm à 0,5 mm.

7. Brossette (24) selon l'une des revendications précédentes, caractérisée par le fait que les poils des touffes de poils (60, 62) présentent un diamètre allant d'environ 0,13 à 0,15 mm (5 à 6 mil) pour un nombre allant d'environ 50 +/- 4 à 60 +/- 4 poils par touffe de poils (60, 62), les touffes de poils plus longs (60) étant de préférence constituées de poils de plus grande épaisseur que les touffes de poils plus courts (62).

8. Brossette (24) selon l'une des revendications précédentes, caractérisée par le fait que sur la couronne extérieure (56) sont disposées quatorze touffes de poils (60, 62) comportant un groupe (70) de quatre touffes de poils courts (62) voisines, un groupe (38) de trois touffes de poils longs (60) voisines, un groupe (70) de quatre touffes de poils courts (62) voisines et un groupe (68) de trois touffes de poils longs (60) voisines.

9. Brossette (24) selon l'une des revendications précédentes, caractérisée par le fait que les touffes de poils ou les groupes (68, 70) de touffes de poils (60, 62) de longueur respectivement différente présentent des couleurs différentes.

10. Brossette (24) selon la revendication 9, caractérisée par le fait que les touffes de poils longs (60) sont constituées de poils contenant un indicateur coloré, en particulier de poils verts ou bleus.

11. Brossette (24) selon la revendication 1, caractérisée par le fait que les touffes de poils (72, 74, 76) de la couronne médiane (54), en particulier disposée concentriquement par rapport à la couronne extérieure (56), présentent une longueur de poils sensiblement homogène.

12. Brossette (24) selon la revendication 1, caractérisée par le fait que les touffes de poils (72, 74) de la couronne médiane (54) présentent une longueur de poils de 7,5 mm +/- 0,2 mm à 0,5 mm pour un diamètre de poils d'environ 0,13 à 0,15 mm (5 à 6 mil) et un nombre allant d'environ 50 +/- 4 à 64 +/- 4 poils par touffe de poils (72, 74).

13. Brossette (24) selon l'une des revendications 11 à 12, caractérisée par le fait que les touffes de poils (74) voisines de la couronne médiane (54), situées radialement vers l'intérieur par rapport aux touffes de poils longs (60) de la couronne extérieure (56) sont constituées de poils contenant un indicateur coloré, en particulier de poils verts ou bleus.

14. Brossette (24) selon la revendication 1, caractérisée par le fait que les touffes de poils (76) de la couronne médiane (54) sont disposées décalées latéralement selon la direction radiale par rapport aux touffes de poils longs (60), voisines, de la couronne extérieure (56).

15. Brossette (24) selon la revendication 14, caractérisée par le fait que le décalage (78, 80) vaut environ 0,5 à 1,5 fois le diamètre des trous de réception (82) des touffes de poils (76).

16. Brossette (24) selon l'une des revendications 14 ou 15, caractérisée par le fait que les touffes de poils (76) de la couronne médiane (54) présentent une longueur de poils allant de 8,0 mm +/-0,2 mm à 0,5 mm pour un diamètre de poils d'environ 0,15 mm (6 mil).

17. Brossette (24) selon l'une des revendications 14 ou 16, caractérisée par le fait que les touffes de poils (76) de la couronne médiane (54) sont constituées de poils contenant un indicateur coloré, en particulier de poils verts ou bleus.

18. Brossette (24) selon l'une des revendications précédentes, caractérisée par le fait que sur une zone intérieure (84) du portepoils (44) sont prévues au moins deux touffes de poils (86) disposées de préférence à peu près perpendiculairement à la position médiane (58) du porte-poils (44).

19. Brossette (24) selon la revendication 18, caractérisée par le fait que sur la zone intérieure (84) du porte-poils (44), les touffes de poils sont disposées sur une couronne intérieure (88).

20. Brossette (24) selon l'une des revendications 18 ou 19, caractérisée par le fait que les poils des touffes de poils (86) de la zone intérieure (84) présentent une longueur allant d'environ 6,5 mm à 8 mm, chaque fois avec une variation de +/- 0,2 mm à 0,5 mm un diamètre d'environ 0,13 à 0,15 mm (5 à 6 mil) et un nombre allant d'environ 50 +/- 4 à 64 +/- 4 poils par touffes de poils (86)..

21. Brossette (24) selon l'une des revendications précédentes, caractérisée par le fait que le porte-poils (44) peut être entraîné en rotation autour de l'axe de rotation (50), en une oscillation alternée allant d'environ 45 à 70 Hz +/-5 Hz, de préférence environ 45 Hz +/- 5 Hz ou 62 Hz +/- 5 Hz, l'angle d'oscillation valant environ à +/-30 degrés +/- 10 degrés, en particulier +/- 5 degrés rapporté à la position médiane (58), l'amplitude de déviation des poils valant environ +/- 3,3 mm et la vitesse des poils valant entre 0,9 m/s et 1,7 m/s, de préférence environ 1,3 m/s.

22. Brossette (24) selon l'une des revendications 1-20, caractérisée par le fait que le porte-poils (44) peut être entraîné en rotation autour de l'axe de rotation (50), dans une oscillation alternée, à une fréquence d'environ 1145 Hz +/- 20 Hz, l'angle d'oscillation valant environ +/- 11 degrés +/- 3 degrés, rapporté à la position médiane (58) l'amplitude de la déviation des poils valant environ 0,5 mm à 2,5 mm, de préférence environ 1,2 mm, et la vitesse des poils valant entre 0,6 m/s et 1,2 m/s, de préférence environ 0,9 m/s.

23. Brossette (24) selon l'une des revendications précédentes, caractérisée par le fait que le porte-poils (44) présente un diamètre d'environ 11 à 15 mm.

24. Brossette (24) selon l'une des revendications précédentes, caractérisée par le fait que la différence de longueur entre les touffes de poils (60, 62) de différentes longueurs vaut environ 0,5 mm à 1 mm, de préférence environ 0,7 mm.
